# FASCICULE DE BREVET EUROPEEN

(11) **EP 2 359 672 B1**
(45) Date de publication et mention de la délivrance du brevet: **30.07.2014**
(21) Numéro de dépôt: 11153823.7
(22) Date de dépôt: 09.02.2011
(51) Int. Cl.: A01C 5/06

(54) **Ensemble semeur comprenant un organe en pointe monté entre deux disques d'ouverture de sillon, et des moyens de libération dudit organe sans démontage des disques**
Säeinheit mit einem spitzen Element zwischen zwei Öffnungsscheiben einer Furche und Mittel zum Freigeben des Elements ohne Abmontieren der Scheiben
Seed unit with a pointed element between two opening discs for a furrow and means for release of the elements without removing the discs

(30) Priorité: 11.02.2010 FR 1000563
(43) Date de publication de la demande: 24.08.2011
(73) Titulaire: Ribouleau Monosem, 79240 Largeasse (FR)
(72) Inventeur: Bergère, Caroline, 79300 Bressuire (FR)
(74) Mandataire: Larcher, Dominique

(56) Documents cités:
- US-A- 3 623 439
- US-A- 4 598 654
- US-A- 5 370 070
- US-A- 6 098 722

## Description

Le domaine de l'invention est celui de la conception et de la fabrication de machines agricoles. Plus précisément, l'invention concerne une ensemble semeur, en particulier mono-graine, destiné à être tracté ou porté, et comprenant un bâti sur lequel sont notamment montés un réservoir de graines et un distributeur desdites graines.

Les ensembles semeurs comprennent, de façon générale, un bâti supportant un réservoir de graines et un distributeur de graines à partir du réservoir, ainsi que des moyens d'ouverture d'un sillon dans le sol, les graines devant être déposées dans le sillon créé par l'ensemble.

De tels ensembles sont destinés, individuellement ou par groupe, à être montés sur un châssis, lui-même entraîné par un tracteur agricole.

L'invention s'applique en particulier au domaine du semi mono-graines, par exemple pour les cultures de maïs, de betteraves et de tournesol, pour lesquelles les graines sont implantées individuellement, en respectant un espacement et une mise en place prédéterminée entre les graines déposées dans le sillon.

Actuellement, les moyens pour ouvrir les sillons se répartissent en deux catégories:
- les socs;
- les paires de disques, communément appelés « double-disques ».

Les socs constituent des organes relativement compacts et peu coûteux pour réaliser les sillons. De plus, ils permettent de configurer « proprement » les sillons : les sillons présentent une section en V bien dessinée, ce qui permet d'obtenir une profondeur de sillon très régulière.

En revanche, les socs présentent notamment les inconvénients de:
- procéder par « arrachage » de terre, ce qui implique d'évoluer dans une terre relativement meuble travaillée au préalable, c'est-à-dire labourée;
- engendrer des résistances relativement importantes lorsque la terre est humide, les socs ayant tendance à faire remonter la terre collante qui peut s'agglutiner en avant du soc et ainsi constituer un frein.

Au fil du temps, la pratique du labourage tend à se perdre ou, à tout le moins, diminue considérablement. Les terres sont donc peu préparées, voire non préparées, et il faut donc travailler une terre plus dure au moment de semer les graines.

En particulier, une terre non labourée oppose une résistance relativement importante à l'opération d'ouverture de sillon avec les socs traditionnels.

A cet effet, il a été mis au point les dispositifs d'ouverture de sillon à double-disques. Dans ces dispositifs, les disques occupent des positions relatives et des inclinaisons permettant de façonner un sillon non plus par arrachage de la terre comme c'est le cas avec le soc, mais par un processus s'apparentant davantage à une opération de découpe de la terre.

Avec ces dispositifs à double-disques, on peut donc ouvrir des sillons dans des terres plus dures et/ou des terres humides.

En outre, les disques peuvent opérer correctement l'ouverture du sillon y compris en cas de présence de déchets végétaux sur le sol, ce qui n'est pas le cas avec les socs traditionnels avec lesquels les déchets végétaux tentent à se coincer devant le soc et à dégrader la qualité du sillon.

Toutefois, ces dispositifs à double-disques tendent à eux seuls à engendrer des sillons dont la section présente une forme en W, plutôt qu'en V.

Il en résulte que la graine, suivant l'endroit où elle se dépose dans le sillon, c'est-à-dire plutôt tout au fond du sillon ou sur la pointe médiane du W, n'est pas déposée à une hauteur constante, ce qui est pourtant un paramètre déterminant pour le développement ultérieur de la plante.

Aussi, il est généralement adjoint à la paire de disques un organe en pointe qui tend à éliminer la pointe médiane de la forme en W du sillon, pour amener celui-ci à la forme voulue en V.

Cet organe est disposé entre les disques.

Bien entendu, cet organe en pointe tend à s'user au fil du temps, et donc à s'émousser. Avec l'usure, l'action de cet organe en pointe n'est plus optimale : le sillon obtenu présente un fond plat, procurant au sillon une section en forme trapézoïdale. Une telle forme de sillon est un inconvénient en ce que la graine libérée par le distributeur, sous l'effet de la vitesse d'avance de l'ensemble, peut rouler sur le fond plat du sillon. On ne maîtrise alors plus la distance entre les graines, cette distance étant pourtant également un paramètre déterminant dans le développement et la qualité ultérieurs de la plante.

Par ailleurs, les organes en pointe sont, pour un même ensemble semeur, disponibles en plusieurs modèles différents, chacun adapté à une nature de sol. L'exploitant doit sélectionner et monter les organes en pointe les mieux adaptés à la terre qu'il va travailler.

Pour l'une et/ou l'autre des raisons qui viennent d'être indiquées, il faut donc régulièrement procéder au remplacement de cet organe en pointe. Bien entendu, celui-ci est monté de façon amovible sur le bâti de l'ensemble semeur. Classiquement, l'organe en pointe est fixé sur le bâti en une zone du bâti s'étendant entre les deux disques correspondants. Il faut alors démonter au moins l'un des deux disques, voire les deux, pour pouvoir procéder au remplacement de l'organe en pointe. Il est généralement nécessaire de démonter en plus au moins une des roues de jauge que comporte l'ensemble semeur.

Le document US 5,370,070 décrit un dispositif d'ouverture de sillons et de dépose de substances agricoles telles que des fertilisants, comprenant des ensembles de deux disques adjacents, un organe en pointe surmonté d'un tube pour la fixation. Le tube est fixé sur le bâti à l'aide de vis et d'écrous situé au dessus des disques et facilement accessible par un opérateur.

Une telle opération s'avère relativement longue et il est courant que l'exploitant, de ce fait, néglige le remplacement des organes en pointe.

L'invention a notamment pour objectif de pallier cet inconvénient de l'art antérieur.

Plus précisément, l'invention a pour objectif de proposer un ensemble semeur de graines, en particulier pour semi mono-graine du type mettant en oeuvre des moyens d'ouverture de sillons sous forme de deux disques adjacents, et un organe en pointe monté de façon amovible sur le bâti entre les deux disques, qui permette un remplacement aisé et rapide dudit organe en pointe.

Ces objectifs, ainsi que d'autres qui apparaîtront par la suite, sont atteints grâce à l'invention qui a pour objet un ensemble semeur, comprenant les caractéristiques de la revendication 1.

Ainsi, grâce à l'invention, le remplacement de l'organe en pointe peut être effectué sans qu'il ne soit nécessaire de démonter l'un des deux disques, voire les deux disques.

En effet, comme cela va apparaître plus clairement par la suite, il est possible pour un opérateur d'accéder directement aux moyens d'actionnement reliés aux moyens de retenue pour libérer l'organe en pointe, ce dernier pouvant être saisi par l'opérateur dans la mesure où il fait saillie entre les disques et en direction du sol. L'opération de remplacement des organes en pointe pouvant être effectuée rapidement et aisément, l'exploitant est incité à procéder à cette opération autant que nécessaire.

Comme expliqué précédemment, le remplacement régulier des organes en pointe permet à l'exploitant d'obtenir des sillons de forme optimisée pour garantir le dépôt des graines à une hauteur constante et un écartement constant, ou quasiment, entre les graines au fond du sillon.

Selon une solution avantageuse, ledit organe en pointe présente une partie supérieure destinée à coopérer selon une liaison mâle/femelle avec moyen de forme complémentaire solidaire dudit bâti s'étendant entre lesdits disques.

On obtient ainsi une sorte de guidage facilitant l'installation de l'organe en pointe sur le bâti.

Ledit organe en pointe forme un élément mâle et ledit moyen de forme complémentaire constitue un élément femelle destiné à coopérer avec ledit organe en pointe.

Selon l'invention, ledit organe présente au moins une partie supérieure longiforme, ledit bâti présentant entre lesdits disques au moins un fourreau dans lequel ladite partie supérieure longiforme est destinée à venir se loger et à y être retenue par lesdits moyens de retenue.

Ladite partie longiforme peut comprendre au moins une encoche, lesdits moyens de retenue comprenant au moins un ergot destiné à être amené dans ladite encoche pour retenir ledit organe en pointe sur ledit bâti.

De cette façon, l'organe en pointe est introduit par coulissement dans le fourreau du bâti et, une fois l'ergot introduit dans l'encoche de la partie longiforme, il n'est plus possible de procéder au coulissement de la partie longiforme de l'organe en pointe dans le fourreau. Le maintien de l'organe en pointe sur le bâti est ainsi obtenu.

Selon une solution particulière, ledit ergot est porté par une tête d'actionnement montée mobile sur une extension dudit fourreau.

Avantageusement, ladite tête d'actionnement est mobile en direction de ladite position de libération desdits moyens de retenue à l'encontre de moyens de rappel élastiquement déformables.

Ainsi, par défaut, les moyens de retenue sont contraints à exercer une force de maintien de l'organe en pointe sur le bâti.

Préférentiellement, lesdits moyens de rappel élastiquement déformables sont portés par ladite extension.

Selon une autre caractéristique avantageuse, un levier d'actionnement s'étend à partir de ladite tête d'actionnement.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est une vue d'un ensemble semeur selon l'invention;
- la figure 2 est une vue de détails des moyens de retenue d'un organe en pointe entre deux disques d'ouverture d'un sillon, en position de retenue de l'organe en pointe;
- la figure 3 est une vue de détails des moyens de retenue d'un organe en pointe entre deux disques d'ouverture d'un sillon, en position de libération de l'organe en pointe.

Tel qu'indiqué précédemment, le principe de l'invention réside dans le fait d'équiper un ensemble semeur, en particulier mono-graine, du type comportant des moyens d'ouverture d'un sillon sous forme de deux disques adjacents avec un organe en pointe monté entre les deux disques, des moyens de retenue de l'organe en pointe et des moyens d'actionnement des moyens de retenue permettant de procéder au remplacement de l'organe en pointe sans démontage de l'un des deux disques voire des deux disques.

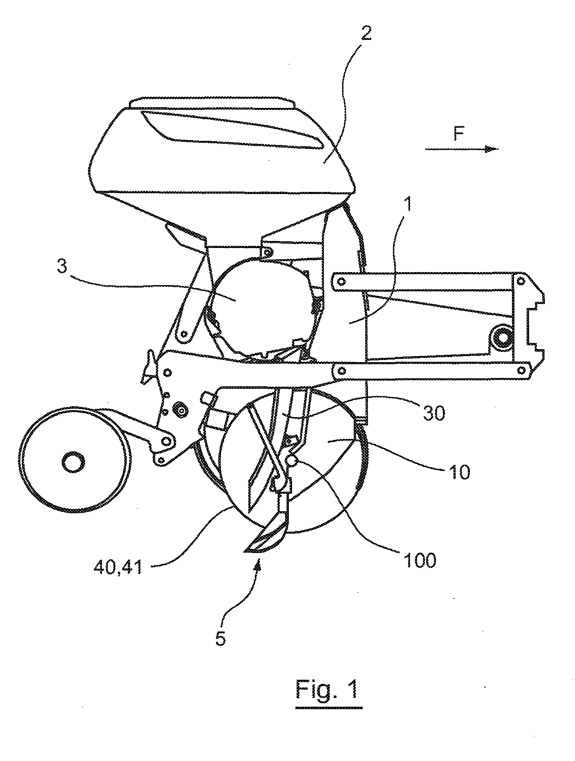

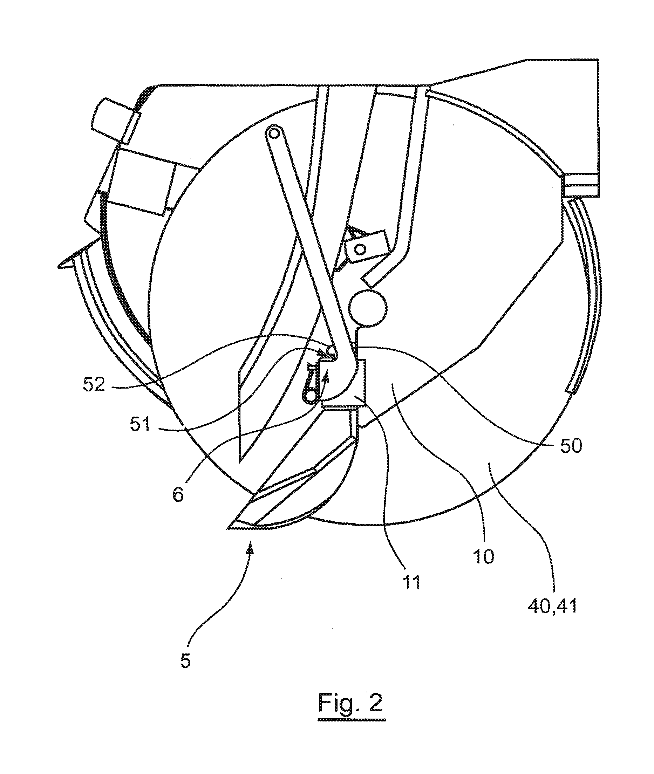

En référence aux figures 1 et 2, un ensemble semeur selon le présent mode de réalisation de l'invention comprend un bâti 1 sur lequel sont montés:
- un réservoir de graines 2 ;
- un distributeur de graines 3, comprenant une goulotte de distribution 30;
- les moyens d'ouverture d'un sillon dans le sol, sous forme de deux disques 40, 41 adjacents;
- un organe en pointe 5, monté entre les deux disques 40, 41 et faisant saillie entre ceux-ci en direction du sol.

Le distributeur de graines est du type mettant en oeuvre un dispositif pneumatique mono-graine adapté pour récupérer par dépression d'air une graine depuis le réservoir 2, et pour laisser ensuite tomber cette graine dans la goulotte de distribution 30.

Le bâti 1 comprend une platine 10 s'étendant entre les disques 40, 41. Cette platine 10 porte les axes 100 sur lequel sont montés les disques 40, 41.

En outre, l'organe en pointe 5 est monté de façon amovible sur cette platine 10.

Selon le principe de l'invention, l'ensemble présente de plus :
- des moyens de retenue de l'organe en pointe 5, montés mobiles entre une position de retenue et une position de libération de l'organe en pointe;
- des moyens d'actionnement reliés aux moyens de retenue.

Les moyens de retenue et les moyens d'actionnement sont décrits plus en détail ci-après.

Selon le présent mode de réalisation, l'organe en pointe 5 présente une partie supérieure 50 longiforme et, parallèlement, la platine 10 porte un fourreau 11 dont les dimensions internes correspondent sensiblement, au jeu près, aux dimensions externes de la partie supérieure 50 de l'organe en pointe.

Ainsi constituée, la partie supérieure de l'organe en pointe coopère avec le fourreau, constituant un moyen de forme complémentaire de la partie supérieure de l'organe en pointe, selon une liaison mâle/femelle, la partie supérieure constituant un élément mâle et le fourreau un élément femelle dans la liaison mâle/femelle.

Le montage de l'organe en pointe sur le bâti s'opère donc en emmanchant la partie supérieure 50 longiforme dans le fourreau 11 solidaire du bâti, les moyens de retenue étant ensuite amenés dans une position selon laquelle ils retiennent l'organe en pointe sur le fourreau tel que décrit ci-après.

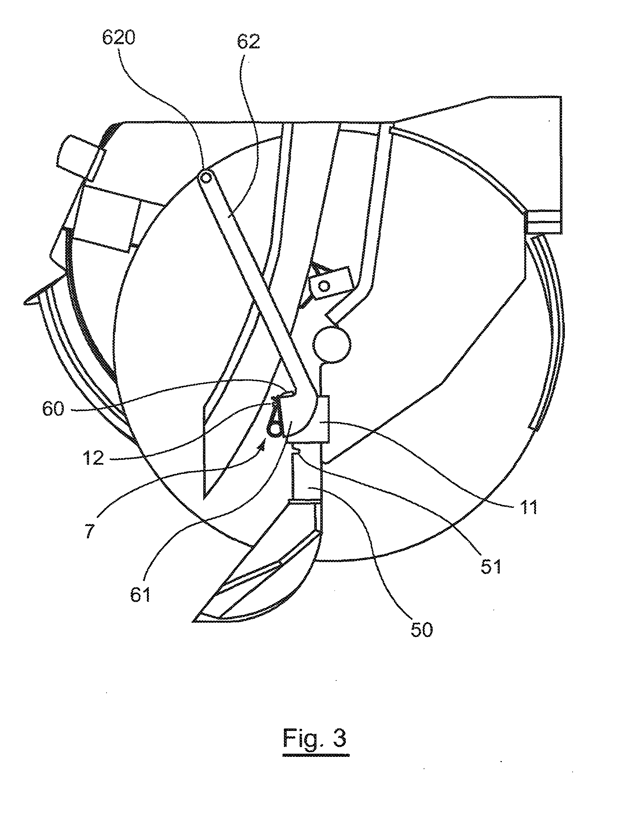

En référence aux figures 2 et 3, la partie supérieure 50 de l'organe en pointe présente une encoche 51 et les moyens de retenue 6 comprennent un ergot 60 destiné à être amené dans l'encoche 51 pour assurer la retenue de l'organe en pointe sur le bâti.

On note que l'encoche 51 est ménagée au voisinage de l'extrémité supérieure de la partie supérieure 50 de l'organe en pointe, et que cette partie supérieure de l'organe en pointe présente une longueur telle que la partie supérieure traverse complètement le fourreau 11 de façon à présenter l'encoche 51 au-dessus du fourreau 11.

Tel que cela apparaît sur les figures 2 et 3, l'ergot 60 est porté par une tête d'actionnement 61 montée mobile sur le fourreau 51 solidaire du bâti.

Cette tête d'actionnement 61 présente une section en U dont les dimensions internes correspondent sensiblement, au jeu près, aux dimensions externes du fourreau 11, la tête d'actionnement étant montée sur le fourreau selon un emboîtement coulissant.

De plus, le fourreau 11 présente une extension 12 sous forme d'une patte, la tête d'actionnement 61 présentant un évidement permettant le passage de cette extension. Tel que cela apparaît sur les figures 2 et 3, une fois la tête d'actionnement montée sur le fourreau 11, l'extension 12 fait saillie de la tête d'actionnement. Lors de l'actionnement des moyens de retenue, la tête d'actionnement coulisse en sa partie supérieure sur l'extension.

En outre, des moyens de rappel élastiques 7 sont montés sur la partie en saillie de l'extension 12, au travers d'un orifice ménagé dans l'extension 12. Ces moyens de rappel élastiques sont conçus et montés pour exercer une contrainte sur la tête d'actionnement 61, tendant à repousser celle-ci dans une position de retenue de l'organe en pointe sur le bâti. En d'autres termes, la tête d'actionnement est mobile en direction de la position de libération de l'ergot 60 à l'encontre de l'action des moyens de rappel élastiquement déformables 7.

Par ailleurs, un levier d'actionnement 62 s'étend à partir de la tête d'actionnement, ceci de façon à présenter une extrémité libre 620 accessible pour un opérateur.

Le remplacement d'un organe en pointe dans un ensemble semeur selon l'invention s'effectue de la façon suivante.

L'opérateur accède à l'extrémité libre 620 du levier d'actionnement 62, soit directement soit par l'intermédiaire d'un crochet qu'il insère dans un orifice ménagé au voisinage de l'extrémité libre 620, de façon à exercer une traction vers l'arrière sur le levier d'actionnement 62 (étant considéré le sens d'avancement indiqué par la flèche F sur la figure 1).

En tirant vers l'arrière sur le levier d'actionnement, l'opérateur dégage l'ergot 60 de l'encoche 51 de la partie supérieure 50 de l'organe en pointe, ceci à l'encontre de l'action des moyens de rappel élastiquement déformables 7.

En l'absence d'aucune action de retenue, l'organe en pointe se dégage du fourreau 11 sous le simple effet de la gravité. Du fait d'un éventuel encrassement, il est possible que l'opérateur doive se saisir de l'organe en pointe et exercer sur lui une traction vers le bas pour le dégager du fourreau 11.

L'opérateur peut alors mettre en place un nouvel organe en pointe : la partie supérieure longiforme de l'organe en pointe est introduite dans le fourreau 11 (l'ensemble semeur pouvant être basculé dans une position relevée pour procéder au remplacement des organes en pointe, permettant à l'opérateur de visualiser les fourreaux entre les disques), ceci en faisant coulisser la partie supérieure dans le fourreau jusqu'à ce que celle-ci traverse complètement le fourreau. L'extrémité 52 de la partie supérieure 50 de l'organe en pointe présentant une forme arrondie, celle-ci constitue une sorte de came agissant sur l'ergot 60 de façon à repousser celui-ci. L'opérateur continue à pousser l'organe en pointe à l'intérieur fourreau 11, ceci jusqu'à amener l'encoche 51 en correspondance avec l'ergot 60, qui pénètre alors l'encoche 51 sous l'effet de la force exercée par les moyens de rappel élastiquement déformables 7 sur la tête d'actionnement 61.

## Revendications

1. Ensemble semeur, comprenant un bâti (10) sur lequel sont montés :
- des moyens d'ouverture (40, 41) d'un sillon dans le sol, sous forme de deux disques adjacents ;
- un organe en pointe (5) monté de façon amovible sur ledit bâti et faisant saillie entre lesdits deux disques et en direction du sol, ledit organe étant destiné à façonner en V ledit sillon,
- des moyens de retenue (6) dudit organe montés mobiles sur ledit bâti (10) entre une position de retenue dudit organe et une position de libération ;
- **caractérisé en ce que** ledit organe (5) présente au moins une partie supérieure longiforme (50), ledit bâti présentant entre lesdits disques au moins un fourreau dans laquelle ladite partie supérieure longiforme est destinée à venir se loger et à y être retenue par lesdits moyens de retenue, et **en ce que** l'ensemble semeur comporte un levier (62) reliés auxdits moyens de retenue, ledit levier amenant les moyens de retenue (6) dans une position retenant la partie longiforme de l'organe en pointe.

2. Ensemble semeur selon la revendication 1, **caractérisé en ce que** la partie longiforme (50) dudit organe en pointe coopére selon une liaison mâle-femelle avec un moyen de forme complémentaire solidaire dudit bâti (10) s'étendant entre lesdits disques.

3. Ensemble semeur l'une des revendications 1 et 2, **caractérisé en ce que** ledit organe en pointe (5) forme un élément mâle et **en ce que** ledit moyen de forme complémentaire constitue un élément femelle destiné à coopérer avec ledit organe en pointe.

4. Ensemble semeur selon la revendication 1, **caractérisé en ce que** ladite partie longiforme (50) comprend au moins une encoche (51), lesdits moyens de retenue comprenant au moins un ergot (60) destiné à être amené dans ladite encoche pour retenir ledit organe en pointe sur ledit bâti.

5. Ensemble semeur selon la revendication 4, **caractérisé en ce que** ledit ergot (60) est porté par une tête d'actionnement montée mobile sur une extension dudit fourreau (11).

6. Ensemble semeur selon la revendication 5, **caractérisé en ce que** ladite tête d'actionnement est mobile en direction de ladite position de libération desdits moyens de retenue à l'encontre de moyens de rappel élastiquement déformables.

7. Ensemble semeur selon la revendication 6, **caractérisé en ce que** lesdits moyens de rappel élastiquement déformables sont portés par ladite extension.

## Patentansprüche

1. Sämaschine, umfassend ein Gestell (10), auf dem montiert sind:
- Mittel (40, 41) zum Öffnen einer Furche im Boden in Form von zwei aneinandergrenzenden Scheiben;
- ein spitzes Element (5), das abnehmbar auf dem Gestell montiert ist und zwischen den beiden Scheiben in Richtung des Bodens hinausragt, wobei das Element dazu bestimmt ist, die Furche V-förmig zu formen,
- Haltemittel (6) für das Element, die auf dem Gestell (10) zwischen einer Halteposition des Elements und einer Freigabeposition beweglich montiert sind;
- **dadurch gekennzeichnet, dass** das Element (5) mindestens einen länglichen oberen Teil (50) aufweist, wobei das Gestell zwischen den Scheiben mindestens eine Hülle aufweist, in der der längliche obere Teil angeordnet und hier von den Haltemitteln gehalten werden soll, und dass die Sämaschine einen Hebel (62) umfasst, der mit den Haltemitteln verbunden ist, wobei der Hebel die Haltemittel (6) in eine Position bringt, in der sie den länglichen Teil des spitzen Elements halten.

2. Sämaschine nach Anspruch 1, **dadurch gekennzeichnet, dass** der längliche Teil (50) des spitzen Elements mit Hilfe einer Aufnahme-Einsteck-Verbindung mit einem Mittel von komplementärer Form zusammenwirkt, das mit dem Gestell (10) verbunden ist und sich zwischen den Scheiben erstreckt.

3. Sämaschine nach einem der Ansprüche 1 und 2, **dadurch gekennzeichnet, dass** das spitze Element (5) ein Einsteckelement bildet, und dass das Mittel von komplementärer Form ein Aufnahmeelement bildet, das dazu bestimmt ist, mit dem spitzen Element zusammenzuwirken.

4. Sämaschine nach Anspruch 1, **dadurch gekennzeichnet, dass** der längliche Teil (50) mindestens eine Kerbe (51) umfasst, wobei die Haltemittel mindestens einen Haken (60) umfassen, der dazu bestimmt ist, in die Kerbe eingeführt zu werden, um das spitze Element auf dem Gestell zu halten.

5. Sämaschine nach Anspruch 4, **dadurch gekennzeichnet, dass** der Haken (60) von einem Betätigungskopf getragen wird, der auf einer Erweiterung der Hülle (11) beweglich montiert ist.

6. Sämaschine nach Anspruch 5, **dadurch gekennzeichnet, dass** der Betätigungskopf in Richtung der Freigabeposition der Haltemittel gegen elastisch verformbare Rückstellmittel beweglich ist.

7. Sämaschine nach Anspruch 6, **dadurch gekennzeichnet, dass** die elastisch verformbaren Rückstellmittel von der Erweiterung getragen werden.

## Claims

1. Planting unit comprising a frame (10) on which there are mounted:
- means (40, 41), in the form of two adjacent discs, for opening a furrow in the ground;
- a pointed member (5) which is mounted in a detachable manner on the said frame and projects between the said two discs and towards the ground, the said member being intended to form the furrow in a V shape;
- means (6) for retaining the said member which are mounted so as to be movable on the said frame (10) between a position for retaining the said member and a releasing position;
- **characterised in that** the said member (5) has at least one elongated upper part (50), the said frame having, between the said discs, at least one sleeve in which the said elongated upper part is intended to lodge and to be retained therein by the said retaining means, and **in that** the planting unit comprises a lever (62) which is connected to the said retaining means, the said lever bringing the retaining means (6) into a position in which they retain the elongated part of the pointed member.

2. Planting unit according to Claim 1, **characterised in that** the elongated part (50) of the pointed member cooperates, along the lines of a male-female connection, with a means of complementary shape which is integral with the said frame (10) and extends between the said discs.

3. Planting unit according to either of Claims 1 or 2, **characterised in that** the said pointed member (5) forms a male element, and **in that** the said means of complementary shape constitutes a female element which is intended to cooperate with the said pointed member.

4. Planting unit according to Claim 1, **characterised in that** the said elongated part (50) comprises at least one notch (51), the said retaining means comprising at least one lug (60) which is intended to be brought into the said notch in order to retain the said pointed member on the said frame.

5. Planting unit according to Claim 4, **characterised in that** the said lug (60) is carried by an actuating head which is mounted so as to be movable on an extension of the said sleeve (11).

6. Planting unit according to Claim 5, **characterised in that** the said actuating head is mobile in the direction of the said position for the release of the said retaining means, against elastically deformable return means.

7. Planting unit according to Claim 6, **characterised in that** the said elastically deformable return means are carried by the said extension.
